# FASCICULE DE BREVET EUROPEEN

(11) **EP 4 303 181 B1**
(45) Date de publication et mention de la délivrance du brevet: **07.10.2026**
(21) Numéro de dépôt: 23183993.7
(22) Date de dépôt: 06.07.2023
(51) Int. Cl.: C01B 21/064

(54) **PROCÉDÉ D'OXYDATION DE NANOTUBES DE NITRURE DE BORE**
VERFAHREN ZUR OXIDATION VON BORNITRID-NANORÖHRCHEN
METHOD FOR OXIDIZING BORON NITRIDE NANOTUBES

(30) Priorité: 07.07.2022 FR 2206976
(43) Date de publication de la demande: 10.01.2024
(73) Titulaire: Commissariat à l'Energie Atomique et aux Energies Alternatives, 75015 Paris (FR)
(72) Inventeur: SIMONATO, Jean-Pierre, 38054 Grenoble cedex 9 (FR); BODIN, Antoine, 38054 Grenoble cedex 9 (FR); PIETRI, Thomas, 38054 Grenoble cedex 9 (FR)
(74) Mandataire: Germain Maureau

(56) Documents cités:
- ZHENG ZHUOYUAN ET AL: "Surface modification of hexagonal boron nitride nanomaterials: a review", JOURNAL OF MATERIAL SCIENCE, KLUWER ACADEMIC PUBLISHERS, DORDRECHT, vol. 53, no. 1, 23 August 2017 (2017-08-23), pages 66 - 99, XP036337756, ISSN: 0022-2461, [retrieved on 20170823], DOI: 10.1007/S10853-017-1472-0
- LIN SHUQIONG ET AL: "Covalent derivatization of boron nitride nanotubes with peroxides and their application in polycarbonate composites", NEW JOURNAL OF CHEMISTRY, vol. 41, no. 15, 19 June 2017 (2017-06-19), GB, pages 7571 - 7577, XP093021219, ISSN: 1144-0546, DOI: 10.1039/C7NJ00193B
- LI FEI ET AL: "Synergistic Catalytic Effect of N-Hydroxyphthalimide/Cobalt Tetraamide Phthalocyanine and Its Application for Aerobic Oxidation of Hydrocarbons and Alcohols", CATALYSIS LETTERS, vol. 151, no. 1, 13 June 2020 (2020-06-13), pages 17 - 26, XP037338394, ISSN: 1011-372X, DOI: 10.1007/S10562-020-03283-Z
- HABIBI D ET AL: "Efficient catalytic systems based on cobalt for oxidation of ethylbenzene, cyclohexene and oximes in the presence of N-hydroxyphthalimide", APPLIED CATALYSIS A: GENERAL, ELSEVIER, AMSTERDAM, NL, vol. 466, 5 July 2013 (2013-07-05), pages 282 - 292, XP028695540, ISSN: 0926-860X, DOI: 10.1016/J.APCATA.2013.06.045

## Description

La présente invention se rapporte au domaine des nitrures de bore et notamment de nanotubes de nitrure de bore également connus sous la terminologie BNNT. En particulier, l'invention propose un procédé d'oxydation douce de ces nanotubes. Selon un deuxième aspect, l'invention propose une utilisation d'une composition oxydante pour oxyder des nanotubes de nitrure de bore.

Parmi les nanomatériaux connus de l'homme de l'art, très peu comportent des propriétés de forte conduction thermique conjuguées à des propriétés diélectriques. Les nanotubes de nitrure de bore sont des nanomatériaux unidimensionnels qui répondent à ces caractéristiques. Ils peuvent trouver de nombreuses applications, par exemple pour des matériaux composites dédiés à la dissipation thermique. Ils sont également connus pour permettre un renforcement mécanique important de certaines matrices.

Les nanomatériaux BNNT présentent un très fort intérêt technologique, mais ils sont parfois difficiles à disperser dans une matrice en raison de leur propension à s'agréger. Différentes études ont montré que la fonctionnalisation de ces nanomatériaux pouvait faciliter leur dispersion dans des matrices, en favorisant l'interaction entre la matrice et la surface chimiquement modifiée des BNNTs. Il est notamment particulièrement intéressant d'obtenir l'oxydation des BNNTs, et de générer des fonctions hydroxyles en surface. Ceci permet d'une part de modifier l'énergie de surface des BNNTs et en conséquence de modifier l'interaction chimique et électrostatique avec leur environnement. D'autre part les BNNTs avec des fonctions hydroxyles forment des intermédiaires très intéressants pour une fonctionnalisation plus avancée, par exemple par greffage des silanes.

Toutefois, les BNNTs sont difficiles à oxyder en raison de leur très faible réactivité. Quelques méthodes ont donné des résultats d'intérêt comme des traitements à l'acide nitrique ou perchlorique, des traitements plasma ou des hydrolyses activées sous ultrasons. Mais les conditions réactionnelles et les réactifs utilisés sont particulièrement corrosifs, nocifs pour l'environnement et conduisent à modifier la structure des nanotubes de façon très importante en détruisant leur motif constitutif hexagonal. Par exemple, un nanotube mesurant une longueur de 2 micromètres ne présente plus qu'une longueur de 1 micromètre après oxydation dans un milieu très réactif. Ceci a pour conséquence d'altérer les propriétés qui les caractérisent.

Le document ZHENG ZHUOYUAN ET AL : « Surface modification of hexagonal boron nitride nanomaterials : a review » JOURNAL OF MATERIAL SCIENCE, KLUWER ACADEMIC PUBLISHERS, DORDRECHT, vol. 53, no. 1, 23 août 2017, pages 66-99, XP036337756, ISSN : 0022-2461, DOI : 10.1007/S10853-017-1472-0 décrit divers traitements utilisant des acides, du peroxyde d'hydrogène ou par fonctionnalisation covalente en présence de radicaux pour oxyder des BNNT et introduire des groupements hydroxyle.

Le document LIN SHUQIONG ET AL. : « Covalent derivatization of boron nitride nanotubes with peroxides and their application in polycarbonate composites » NEW JOURNAL OF CHEMISTRY, vol. 41, no. 15, 19juin 2017, pages 7571-7577, XP093021219, ISSN : 1144-0546, DOI : 10.1039/C7NJ00193B décrit des BNNT oxydés comprenant 3% de groupements hydroxyl.

En dehors du domaine des BNNT, il est connu que l'utilisation de NHPI en combinaison avec des composés de cobalt tels que du tetramide phthalocyanine cobalt (voir le document LI FEI ET AL : « Synergistic Catalytic effect of N-Hydroxyphtalimide/Cobalt Tetraamide Phtalocyanine ans its application for aerobic oxidation of hydrocarbons and alcohols », CATALYSIS LETTERS, vol. 151, no. 1, 13 juin 2020, pages 17-26, XP037338394, ISSN : 1011-372X, DOI : 10.1007/S10562-020-03283-Z) ou de l'acétate de cobalt (voir le document HABIBI D ET AL : « Efficient catalytic systems based on cobalt for oxidation of ethylbenzene, cyclohexene and oximes in the presence of N-hydroxyphthalimide », APPLIED CATALYSIS A : GENERAL, ELSEVIER, AMSTERDAM, NL, vol. 466, 5 juillet 2013, pages 282-292, XP028695540, ISSN : 0926-860X, DOI : 10.1016/J.APCATA.2013.06.045) peut être envisagée pour l'oxydation de composés organiques tels que des hydrocarbures, alcools ou composés aromatiques.

Un des buts de la présente invention consiste à pallier au moins l'un des inconvénients précités. A cet effet, la présente invention propose un procédé d'oxydation de nanotubes de nitrure de bore (BNNT) comprenant les étapes de :
- préparation d'un mélange réactionnel comprenant :
   ∘ la dispersion de nanotubes de nitrure de bore (BNNT) dans un solvant organique constitué par un monoacide carboxylique comprenant 1 à 5 atomes de carbone, et en particulier l'acide acétique,
   ∘ l'ajout de N-hydroxyphtalimide (NHPI) ;
   ∘ l'ajout d'un dérivé de cobalt choisi parmi l'acétylacétonate de cobalt Co(C₅H₇O₂)₂ . 4 H₂O, l'acétate de cobalt Co (C₂H₃O₂). 4 H₂O, et le chlorure de cobalt CoCl₂; et
   ∘ l'injection d'un gaz comprenant de l'oxygène, et
- chauffage du mélange réactionnel à une température comprise entre 70°C et 100°C pendant une durée comprise entre 1h et 200h, notamment entre 1h à 100h et par exemple entre 4 h à 60h, de sorte à obtenir des nanotubes de nitrure de bore oxydé (BNNT-OH) avec un taux d'oxydation compris entre 0,01 et 5% et notamment entre 0,1 à 2%.

Le procédé de la présente invention utilise avantageusement des conditions douces d'oxydation qui ne détruisent pas les nanotubes et qui sont compatibles avec les contraintes industrielles. Le rendement du procédé d'oxydation est supérieur à 90%.

Un système catalytique composé de N-hydroxyphtalimide et d'un dérivé de cobalt en présence d'air a déjà été décrit comme conduisant à l'oxydation de composés organiques, en particulier d'alcanes ou d'alcools. Toutefois, rien ne laissait présager que les BNNTs, s'oxyderaient avec ce système fonctionnant par une voie radicalaire, les BNNTs sont des matériaux inorganiques, très stables face aux oxydants, et d'une structure hexagonale très différente de celles des molécules organiques précédemment utilisées.

Selon une possibilité, la préparation du mélange réactionnel comprend en outre l'ajout d'un dérivé de manganèse choisi parmi Mn(OAc)₂, Mn(acac)₂, MnCl₂.

Une augmentation de la cinétique de réaction est observée en présence de dérivés de manganèse en plus de la présence de dérivés du cobalt. Le système catalytique est plus efficace, ce qui réduit la durée de réaction, et donc diminue le coût du procédé par une occupation moins longue des réacteurs.

Selon une disposition, la NHPI est ajoutée dans le mélange réactionnel de sorte à atteindre une proportion comprise entre 0.001% et 25% molaire, notamment entre 0.01% et 15% molaire et par exemple entre 1 et 10% molaire.

Selon une possibilité, la NHPI est ajoutée dans un rapport massique compris entre 0,1 et 2 fois la masse des BNNTs, par exemple un rapport massique de 1,3.

Selon une possibilité, le dérivé de cobalt est ajouté dans le mélange réactionnel de sorte à atteindre une proportion en poids comprise entre 10 ppm à 1% en poids, notamment entre 100 et 5000 ppm en poids.

Selon une variante, le dérivé de manganèse est ajouté dans le mélange réactionnel de sorte à atteindre une proportion en poids comprise entre 10 ppm à 1% en poids, notamment entre 100 et 5000 ppm en poids.

Selon une possibilité, l'injection du gaz comprenant de l'oxygène est réalisé avec un débit compris entre 1x10⁻⁶ m³/s/(Litre de solvant) et 1x10⁻⁴ m³/s/(Litre de solvant), par exemple entre 2.10⁻⁶ m³/s/(Litre de solvant) et 8.10⁻⁵ m³/s/(Litre de solvant).

Concrètement, le procédé est réalisé sous une pression comprise entre 10⁵ à 10⁷ Pa, notamment de 10⁵ à 10⁶ Pa et par exemple de 10⁵ Pa à 2.10⁵ Pa.

Selon une disposition, le procédé comprend, après le chauffage du mélange réactionnel, et notamment le refroidissement du mélange réactionnel, la filtration des BNNT oxydés (BNNT-OH) suivi du rinçage par de l'eau, notamment par de l'eau déionisée.

Selon une possibilité, le mélange réactionnel est maintenu sous agitation, notamment sous agitation magnétique, au moins en partie sur la durée de la réaction d'oxydation.

Selon un deuxième aspect, l'invention propose l'utilisation d'une composition oxydante, la composition oxydante comprenant :
- de la N-hydroxyphtalimide (NHPI),
- un solvant organique constitué par un monoacide carboxylique comprenant 1 à 5 atomes de carbone, et en particulier l'acide acétique,
- un gaz comprenant de l'oxygène injecté dans le solvant organique et
- un dérivé de cobalt choisi parmi l'acétylacétonate de cobalt Co(Acac)₂, l'acétate de cobalt Co(OAc)₂, et le chlorure de cobalt CoCl₂,
pour oxyder des nanotubes de nitrure de bore.

Selon une variante, la composition oxydante utilisée pour oxyder des nanotubes de nitrure de bore comprend en outre un dérivé de manganèse choisi parmi Mn(OAc)₂, Mn(acac)₂, MnCl₂.

Selon d'autres caractéristiques, le procédé d'oxydation de BNNT de l'invention comporte une ou plusieurs des caractéristiques optionnelles suivantes considérées seules ou en combinaison :
∘ Le procédé d'oxydation est réalisé dans une gamme de pression allant d'environ 1.10⁵ Pa à 1.10⁷ Pa, notamment d'environ 1.10⁵ Pa à 1.10⁶ Pa et par exemple d'environ 1.10⁵ Pa à 2.10⁵ Pa.
∘ L'injection du gaz comprenant de l'oxygène est réalisé à partir d'air comprimé comprenant entre 15 et 25% vol. d'oxygène.
∘ L'injection du gaz comprenant de l'oxygène est réalisé à partir d'air enrichi en oxygène, comprenant notamment entre 15 et 80% vol. d'oxygène.
∘ L'injection du gaz comprenant de l'oxygène est réalisé à partir d'un gaz neutre tel que N₂ ou Ar, comprimé et enrichi en oxygène, dans une proportion comprise entre 1 à 40% vol.
∘ L'injection du gaz comprenant de l'oxygène est réalisé par bullage dans le solvant.
∘ Le bullage est réalisé par l'utilisation d'un bulleur se composant d'une source du gaz comprenant de l'oxygène comprimé au préalable, d'une vanne de régulation de débit du gaz et d'un tube plongeur plongeant dans le solvant.
∘ La réaction est réalisée sous pression et l'injection du gaz comprenant de l'oxygène est réalisée dans le ciel du réacteur recevant le mélange réactionnel.
∘ La réaction est réalisée dans une gamme de pression allant d'environ 1.10⁵ Pa à 1.10⁷ Pa et l'injection du gaz comprenant de l'oxygène est réalisée dans le mélange réactionnel.

D'autres caractéristiques et avantages apparaitront à la lecture de la description détaillée ci-après, d'un exemple de mise en œuvre non limitatif, faite en référence aux figures annexées dans lesquelles :
[Fig.1] illustre la réaction d'oxydation de nanotubes de nitrure de bore selon un mode de réalisation de l'invention.
[Fig.2] est un diagramme illustrant la courbe de poids du produit obtenu selon un mode de réalisation du procédé d'oxydation en fonction de la température
[Fig.3] illustre l'absorbance de BNNTs soumis au milieu réactionnel de l'invention sans dispositif catalytique.
[Fig.4] illustre un agrandissement de la région A de la figure 3.
[Fig.5] illustre un agrandissement de la région B de la figure 3.
[Fig.6] illustre l'absorbance de BNNT-OH obtenu selon le mode de réalisation de l'invention avec dispositif catalytique.
[Fig.7] illustre un agrandissement de la région A de la figure 6.
[Fig.8] illustre un agrandissement de la région B de la figure 6.
[Fig.9] illustre un spectre XPS du BNNTs soumis au milieu réactionnel de l'invention sans dispositif catalytique.
[Fig.10] illustre un spectre XPS de BNNT-OH obtenu selon le mode de réalisation de l'invention avec dispositif catalytique.

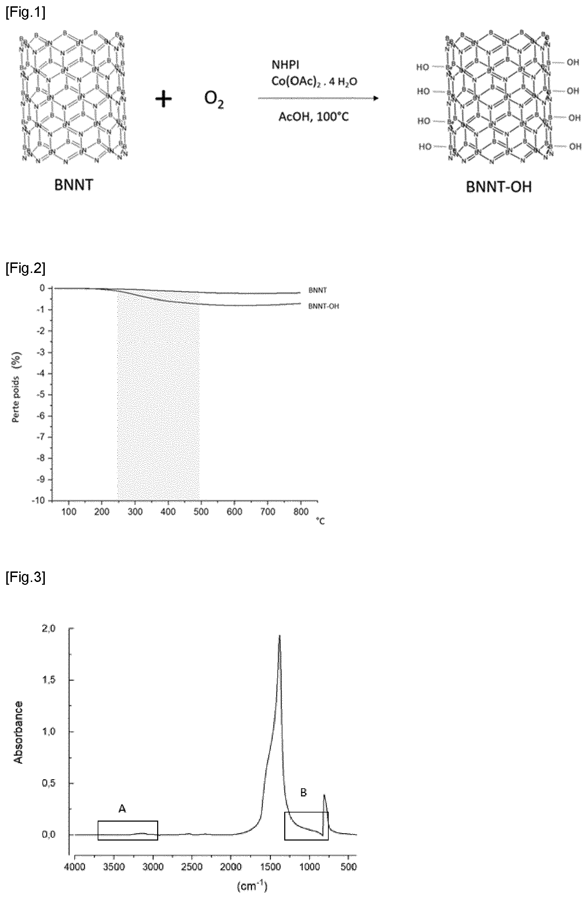

Comme illustré sur la figure 1, la présente invention propose un procédé d'oxydation douce, par voie catalytique en aérobie, de nanotubes de nitrure de bore BNNT à l'aide de NHPI et d'un dérivé de cobalt qui permet la formation de liaisons hydroxyles. Le procédé consiste en la préparation d'un mélange réactionnel comprenant la dispersion de BNNT sous agitation dans un solvant organique, peu sensible à l'oxydation et par exemple de l'acide acétique, l'ajout d'une quantité catalytique de NHPI et d'un dérivé de cobalt II ou de cobalt III. Selon une possibilité non illustrée, une quantité catalytique d'un dérivé de manganèse est également ajoutée à la dispersion. L'oxygène est apporté par injection dans le solvant d'un gaz comprimé comprenant de l'oxygène. L'injection peut notamment être réalisée par un bullage régulier. Le gaz peut être de l'air comprimé enrichi ou non en O₂, un gaz neutre, tel que de l'argon ou de l'azote enrichi en oxygène.

Le mélange réactionnel ainsi obtenu est chauffé sous agitation jusqu'à atteindre une température située dans une plage de 70 à 100°C environ, la température étant choisie pour être inférieure ou égale au point d'ébullition du solvant. Cette température est maintenue pendant la durée nécessaire à l'oxydation, par exemple pendant 1 à 200 heures, selon la température de chauffage, la teneur en oxygène, la quantité de catalyseurs utilisés et la composition du système catalytique (dérivés de Mn et/ou dérivés de Co).

Une fois l'oxydation terminée, les nanotubes de nitrure de bore oxydés BNNT-OH se trouvent en dispersion dans le solvant. Ils sont récupérés par filtration, notamment après refroidissement jusqu'à température ambiante, et rincés à plusieurs reprises par de l'eau, notamment de l'eau déionisée pour obtenir du BNNT-OH suffisamment pur pour son utilisation ou une fonctionnalisation complémentaire. Le taux d'oxydation du BNNT-OH mesuré par analyse thermogravimétrique (ATG) est compris entre 0.01% et 5%.

### 1- Exemple témoin :

Un exemple de mise en œuvre témoin, dans lequel du BNNT est traité dans les conditions du procédé de l'invention mais sans dispositif catalytique, est tout d'abord réalisé pour comparaison avec le procédé de l'invention utilisant le dispositif catalytique.

Du BNNT (200 mg, achetés chez la société BNNano) sont placés dans un ballon contenant 150 mL d'acide acétique sous agitation magnétique. Un plongeant est introduit, assurant un bullage d'air régulier d'environ 1,3x10⁻⁵ m³/s/(L de solvant).

Le mélange est mis à chauffer à 100°C durant 60h.

Après refroidissement, le solide résiduel est filtré et lavé par 4 fois par 200 mL d'eau déionisée.

Il est ensuite analysé par spectroscopie IR. Aucun changement spectral n'est relevé par rapport au nanomatériau de départ.

2- **Exemple de mise en œuvre de l'invention** comprenant le système catalytique est maintenant décrit en détail :
Du BNNT (200 mg, achetés chez BNNano) est placé dans un ballon contenant 150 mL d'acide acétique, 260 mg de NHPI, 7 mg de cobalt sous forme Co(OAc)₂, 4 H₂O et 7 mg de manganèse sous forme Mn(OAc)₂, 4 H₂O, sous agitation magnétique. Un plongeant est introduit, assurant un bullage d'air régulier d'environ 1,3x10⁻⁵ m³/s/(L de solvant).

Le mélange est mis à chauffer à 100°C durant 60h.

Après refroidissement, le solide est filtré et lavé par 4 fois 200 mL d'eau déionisée.

Il est ensuite analysé par ATG (STA 449 -Netzsch - rampe 30-800°C à 5K/min). Comme illustré à la figure 2, une perte de masse est observée entre 240°C et 500°C pour le BNNT traité avec le système catalytique (BNNT (I) sur la figure 2) au contraire du BNNT traité sans dispositif catalytique (BNNT (0) sur la figure 2). Cette perte de masse est attribuée à la perte de fonctions hydroxyles, comme déjà rapporté dans la littérature (Diez-Pascual et al., RSC Adv., 2016, 6, 79507).

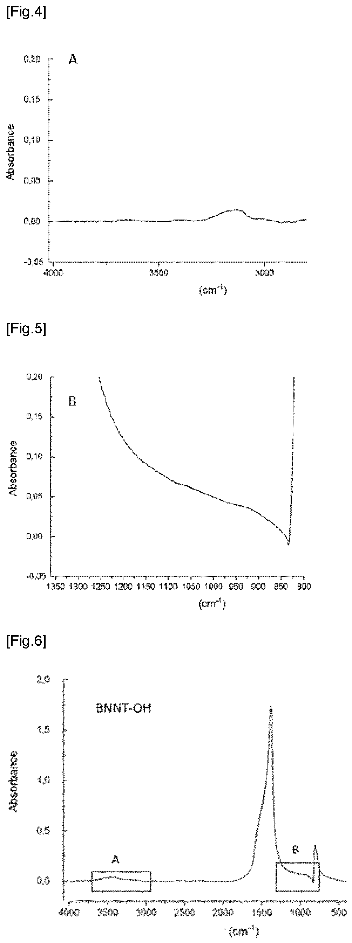

Les solides issus des deux réactions de BNNT traités avec ou sans système catalytique sont également analysés par Infra Rouge (analyse spectrométrique sur un appareil FTIR : Vertex 70 - Bruker Optics- méthode transmission KBr). Les figures 3 à 5 illustrent le résultat de la mesure effectuée sur le BNNT traité sans le système catalytique et les figures 6 à 8 illustrent le résultat de la mesure effectuée sur le BNNT traité avec le système catalytique - (BNNT-OH). Pour ce dernier cas seulement, un pic dans la région A est visible à environ 3400-3500 cm⁻¹. Ce pic est attribué à la formation de groupes hydroxyles, ce qui est corroboré par la présence d'une bande de vibration dans la région B à environ 950 cm⁻¹ caractéristique de la liaison B-OH. Aucun de ces pics n'apparait sur les mesures effectuées sur le BNNT traité sans dispositif catalytique.

Ces analyses démontrent la formation de liaisons hydroxyles sur les BNNTs, traduisant de facto leur oxydation selon le procédé décrit dans cet exemple de réalisation d l'invention.

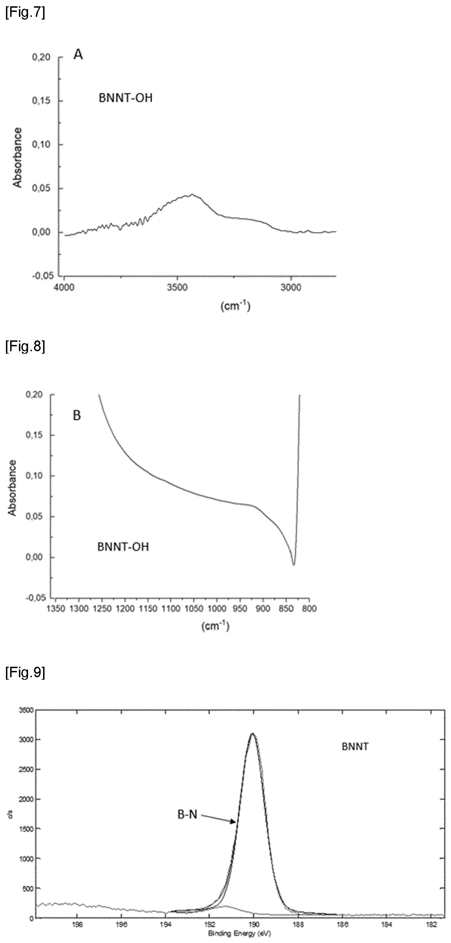

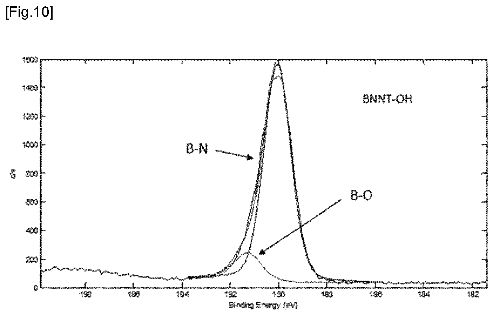

Egalement illustré à la figure 9, une analyse XPS (appareil VERSAPROBE-II - Physical Electronics) réalisée sur le BNNT traité sans le système catalytique montre un pic à environ 190eV correspondant à une composition exclusivement composée de 'B-N'. La même analyse XPS réalisée sur le solide après traitement avec le système catalytique (BNNT-OH sur la figure 10) montre un pic à environ 190eV illustrant la présence de 'B-N' et un pic dans la région C illustrant la présence de 'B-O' avec un taux d'environ 5%.

Ces deux exemples réalisés avec ou sans dispositif catalytique montrent l'obtention de nanotubes de nitrure de bore oxydés grâce au procédé d'oxydation catalytique aérobique de la présente invention.

Ainsi, la présente invention permet une méthode d'oxydation douce des nanotubes de nitrure de bore hexagonal. Cette oxydation conduit à la création de liaisons hydroxyles en vue d'améliorer les propriétés de dispersion des BNNTs. Les BNNTs ainsi obtenus peuvent aussi servir d'intermédiaires pour former des molécules hautement fonctionnalisées. La méthode d'oxydation est peu coûteuse et satisfait les critères industriels; elle est réalisée avec un système catalytique, dans un solvant usuel et en présence d'oxygène naturellement présent dans l'air, la température de réaction reste par ailleurs inférieure à environ 100°C.

## Revendications

1. Procédé d'oxydation de nanotubes de nitrure de bore (BNNT) comprenant les étapes de :
- préparation d'un mélange réactionnel comprenant :
∘ la dispersion de nanotubes de nitrure de bore (BNNT) dans un solvant organique constitué par un monoacide carboxylique comprenant 1 à 5 atomes de carbone,
∘ l'ajout de N-hydroxyphtalimide (NHPI) ;
∘ l'ajout d'un dérivé de cobalt choisi parmi l'acétylacétonate de cobalt, l'acétate de cobalt, et le chlorure de cobalt, et
∘ l'injection d'un gaz comprenant de l'oxygène, et
- chauffage du mélange réactionnel à une température comprise entre 70°C et 100°C pendant une durée comprise entre 1h et 200h, de sorte à obtenir des nanotubes de nitrure de bore oxydé (BNNT-OH) avec un taux d'oxydation compris entre 0,01 et 5%.

2. Procédé d'oxydation de nanotubes de nitrure de bore selon la revendication 1, dans lequel la préparation du mélange réactionnel comprend en outre l'ajout d'un dérivé de manganèse choisi parmi Mn(OAc)₂, Mn(acac)₂, MnCl₂.

3. Procédé d'oxydation de nanotubes de nitrure de bore selon la revendication 2, dans lequel le dérivé de manganèse est ajouté dans le mélange réactionnel de sorte à atteindre une proportion en poids comprise entre 10 ppm à 1% en poids.

4. Procédé d'oxydation de nanotubes de nitrure de bore selon l'une des revendications 1 à 3, dans lequel la NHPI est ajoutée dans le mélange réactionnel de sorte à atteindre une proportion massique comprise entre un dixième et deux fois la masse de BNNTs.

5. Procédé d'oxydation de nanotubes de nitrure de bore selon l'une des revendications 1 à 4, dans lequel le dérivé de cobalt est ajouté dans le mélange réactionnel de sorte à atteindre une proportion en poids comprise entre 10 ppm à 1% en poids.

6. Procédé d'oxydation de nanotubes de nitrure de bore selon l'une des revendications 1 à 5, dans lequel l'injection du gaz comprenant de l'oxygène est réalisée avec un débit compris entre 1x10⁻⁶ m³/s/(Litre de solvant) et 1x10⁻⁴ m³/s/(Litre de solvant).

7. Procédé d'oxydation de nanotubes de nitrure de bore selon l'une des revendications 1 à 6, dans lequel le procédé est réalisé sous une pression comprise entre 10⁵ à 10⁷ Pa.

8. Procédé d'oxydation de nanotubes de nitrure de bore selon l'une des revendications 1 à 7, comprenant après le chauffage du mélange réactionnel, la filtration du BNNT oxydé suivi du rinçage par de l'eau.

9. Procédé d'oxydation de nanotubes de nitrure de bore selon l'une des revendications 1 à 8, dans lequel le mélange réactionnel est maintenu sous agitation, au moins en partie sur la durée de la réaction d'oxydation.

10. Utilisation d'une composition oxydante, la composition oxydante comprenant :
- de la N-hydroxyphtalimide (NHPI),
- un solvant organique constitué par un monoacide carboxylique comprenant 1 à 5 atomes de carbone,
- un gaz comprenant de l'oxygène injecté dans le solvant organique et
- un dérivé de cobalt choisi parmi l'acétylacétonate de cobalt, l'acétate de cobalt, et le chlorure de cobalt,
pour oxyder des nanotubes de nitrure de bore.

11. Utilisation d'une composition oxydante selon la revendication précédente, dans laquelle la composition oxydante comprend en outre un dérivé de manganèse choisi parmi Mn(OAc)₂, Mn(acac)₂, MnCl₂.

## Patentansprüche

1. Verfahren zur Oxidation von Bornitrid-Nanoröhrchen (BNNT), umfassend die folgenden Schritte:
- Zubereiten eines Reaktionsgemischs, umfassend:
∘ Dispergieren von Bornitrid-Nanoröhrchen (BNNT) in einem organischen Lösungsmittel, das aus einer Monocarbonsäure mit 1 bis 5 Kohlenstoffatomen besteht,
∘ Zugeben von N-Hydroxyphtalimid (NHPI);
∘ Zugeben eines Kobaltderivats, ausgewählt aus Kobaltacetylacetonat, Kobaltacetat und Kobaltchlorid, und
∘ Einleiten eines Gases, das Sauerstoff umfasst, und
- Erhitzen des Reaktionsgemischs auf eine Temperatur zwischen 70°C und 100°C für eine Dauer zwischen 1h und 200h, um oxidierte Bornitrid-Nanoröhrchen (BNNT-OH) mit einer Oxidationsrate zwischen 0,01 und 5 % zu erhalten.

2. Verfahren zur Oxidation von Bornitrid-Nanoröhrchen nach Anspruch 1, wobei die Vorbereitung des Reaktionsgemischs weiter das Zugeben eines Manganderivats umfasst, ausgewählt aus Mn(OAc)₂, Mn(acac)₂, MnCl₂.

3. Verfahren zur Oxidation von Bornitrid-Nanoröhrchen nach Anspruch 2, wobei das Manganderivat der Reaktionsmischung so zugegeben wird, dass ein Gewichtsanteil von 10 ppm bis 1 Gew.-% erreicht wird.

4. Verfahren zur Oxidation von Bornitrid-Nanoröhrchen nach einem der Ansprüche 1 bis 3, wobei NHPI in das Reaktionsgemisch zugegeben wird, um einen Massenanteil zwischen einem Zehntel und dem Doppelten der Masse von BNNts zu erreichen.

5. Verfahren zur Oxidation von Bornitrid-Nanoröhrchen nach einem der Ansprüche 1 bis 4, wobei das Kobaltderivat der Reaktionsmischung so zugegeben wird, dass ein Gewichtsanteil von 10 ppm bis 1 Gew.-% erreicht wird.

6. Verfahren zur Oxidation von Bornitrid-Nanoröhrchen nach einem der Ansprüche 1 bis 5, wobei das Einleiten des Sauerstoff enthaltenden Gases mit einer Durchflussrate zwischen 1×10⁻⁶ m³/s/(Liter Lösungsmittel) und 1×10⁻⁴ m³/s/(Liter Lösungsmittel) erfolgt.

7. Verfahren zur Oxidation von Bornitrid-Nanoröhrchen nach einem der Ansprüche 1 bis 6, wobei das Verfahren unter einem Druck zwischen 10⁵ und 10⁷ Pa durchgeführt wird.

8. Verfahren zur Oxidation von Bornitrid-Nanoröhrchen nach einem der Ansprüche 1 bis 7, umfassend nach dem Erhitzen des Reaktionsgemischs die Filtration des oxidierten BNNT gefolgt vom Spülen mit Wasser.

9. Verfahren zur Oxidation von Bornitrid-Nanoröhrchen nach einem der Ansprüche 1 bis 8, wobei das Reaktionsgemisch mindestens teilweise über die Dauer der Oxidationsreaktion unter Rühren gehalten wird.

10. Verwendung einer oxidierenden Zusammensetzung, wobei die oxidierende Zusammensetzung Folgendes umfasst:
- N-Hydroxyphtalimid (NHPI),
- ein organisches Lösungsmittel, das aus einer Monocarbonsäure mit 1 bis 5 Kohlenstoffatomen besteht,
- ein Gas, das Sauerstoff umfasst, das in das organische Lösungsmittel eingeleitet wird, und
- ein Kobaltderivat, ausgewählt aus Kobaltacetat, Kobaltacetat und Kobaltchlorid,
zum Oxidieren von Bornitrid-Nanoröhrchen.

11. Verwendung einer oxidierenden Zusammensetzung nach dem vorhergehenden Anspruch, wobei die oxidierende Zusammensetzung ferner ein Manganderivat umfasst, ausgewählt aus Mn(OAc)₂, Mn(acac)₂, MnCl₂.

## Claims

1. A process for oxidizing boron nitride nanotubes (BNNTs) comprising the steps of:
- preparing a reaction mixture comprising:
∘ dispersing boron nitride nanotubes (BNNTs) in an organic solvent consisting of a carboxylic monoacid comprising 1 to 5 carbon atoms,
∘ adding N-hydroxyphthalimide (NHPI);
∘ adding a cobalt derivative selected from cobalt acetylacetonate, cobalt acetate and cobalt chloride, and
∘ injecting a gas containing oxygen, and
- heating the reaction mixture to a temperature between 70°C and 100°C for a duration between 1 hour and 200 hours, so as to obtain oxidized boron nitride nanotubes (BNNT-OH) with an oxidation rate between 0,01 and 5%.

2. The process for oxidizing boron nitride nanotubes according to claim 1, wherein the preparation of the reaction mixture further comprises adding a manganese derivative selected from Mn(OAc)₂, Mn(acac)₂, MnCl₂.

3. The process for oxidizing boron nitride nanotubes according to claim 2, wherein the manganese derivative is added to the reaction mixture so as to achieve a weight proportion between 10 ppm and 1% by weight.

4. The process for oxidizing boron nitride nanotubes according to any of claims 1 to 3, wherein NHPI is added to the reaction mixture so as to achieve a mass proportion between one-tenth and two times the mass of BNNTs.

5. The process for oxidizing boron nitride nanotubes according to any of claims 1 to 4, wherein the cobalt derivative is added to the reaction mixture so as to achieve a weight proportion between 10 ppm and 1% by weight.

6. The process for oxidizing boron nitride nanotubes according to any of claims 1 to 5, wherein the injection of the gas containing oxygen is carried out at a flow rate between 1 x 10⁻⁶ m³/s/(liter of solvent) and 1 x 10⁻⁴ m³/s/(liter of solvent).

7. The process for oxidizing boron nitride nanotubes according to any of claims 1 to 6, wherein the process is carried out under a pressure between 10⁵ and 10⁷ Pa.

8. The process for oxidizing boron nitride nanotubes according to any of claims 1 to 7, comprising, after heating the reaction mixture, filtering the oxidized BNNT followed by rinsing with water.

9. The process for oxidizing boron nitride nanotubes according to any of claims 1 to 8, wherein the reaction mixture is maintained under stirring for at least part of the duration of the oxidation reaction.

10. A use of an oxidizing composition, the oxidizing composition comprising:
- N-hydroxyphthalimide (NHPI),
- an organic solvent consisting of a carboxylic monoacid comprising 1 to 5 carbon atoms,
- a gas containing oxygen injected into the organic solvent, and
- a cobalt derivative selected from cobalt acetylacetonate, cobalt acetate, and cobalt chloride,
for oxidizing boron nitride nanotubes.

11. The use of an oxidizing composition according to the preceding claim, wherein the oxidizing composition further comprises a manganese derivative selected from Mn(OAc)₂, Mn(acac)₂, MnCl₂.
